# EUROPÄISCHE PATENTSCHRIFT

(11) **EP 2 755 503 B1**
(45) Veröffentlichungstag und Bekanntmachung des Hinweises auf die Patenterteilung: **16.12.2015**
(21) Anmeldenummer: 12756483.9
(22) Anmeldetag: 11.09.2012
(51) Int. Cl.: A23L 1/212, A23L 3/3454, C07B 63/00, B30B 9/00, B30B 9/02

(54) **VERFAHREN UND ANLAGE ZUR AUFARBEITUNG VON ALPEORUJO**
METHOD AND PLANT FOR PROCESSING WET OLIVE POMACE
PROCÉDÉ ET INSTALLATION DE TRAITEMENT DE GRIGNONS PÂTEUX D'OLIVE

(30) Priorität: 12.09.2011 DE 102011053527
(43) Veröffentlichungstag der Anmeldung: 23.07.2014
(73) Patentinhaber: GEA Mechanical Equipment GmbH, 59302 Oelde (DE)
(72) Erfinder: HRUSCHKA, Steffen, 59302 Oelde (DE); CORREA, Tomás Ignacio Eguiguren, Santiago de Chile (CL); CORBELLA, José Alberto, Santiago de Chile (CL)
(74) Vertreter: Specht, Peter
(86) Internationale Anmeldenummer: PCT/EP2012/067697
(87) Internationale Veröffentlichungsnummer: WO 2013/037751

(56) Entgegenhaltungen:
- WO-A1-2005/021695
- WO-A1-2006/005986
- WO-A1-2007/042742
- WO-A2-2004/110171
- ALBURQUERQUE J A ET AL: "Effects of bulking agent on the composting of ''alperujo'', the solid by-product of the two-phase centrifugation method for olive oil extraction", PROCESS BIOCHEMISTRY, ELSEVIER, NL, Bd. 41, Nr. 1, 1. Januar 2006 (2006-01-01) , Seiten 127-132, XP027983960, ISSN: 1359-5113 [gefunden am 2006-01-01]
- J ALBURQUERQUE: "Agrochemical characterisation of "alperujo", a solid by-product of the two-phase centrifugation method for olive oil extraction", BIORESOURCE TECHNOLOGY, Bd. 91, Nr. 2, 1. Januar 2004 (2004-01-01) , Seiten 195-200, XP55042054, ISSN: 0960-8524, DOI: 10.1016/S0960-8524(03)00177-9

## Beschreibung

Die Erfindung betrifft ein Verfahren zur Aufarbeitung von Alpeorujo nach dem Oberbegriff des Anspruchs 1.

Die DE 4206006C1 vom 16.9.1993 (Düppjohann/Geissen) beschreibt ein Verfahren bei dem vermahlene Oliven in Form eines Breies ohne Wasserzugabe in die Phasen "Öl" und nahezu "Ölfreie Pülpe" getrennt werden. Diese Pülpe, die sich zusammensetzt aus den beiden Bestandteilen Fruchtwasser (spanisch Alpechin) sowie öl-und wasserfreien Trester mit ca. 50% Feuchte (spanisch Orujo), bezeichnet man als Flüssig-Trester oder "Alpe-Orujo".

Die EP 1 260 571 A1 offenbart ein Verfahren zur Ölgewinnung aus Früchten oder Saaten, vorzugsweise Oliven oder Avocados, mit einer Vollmantel-Schneckenzentrifuge und eine Anlage zur Ölgewinnung. Dabei werden die Früchte oder Saaten zerkleinert und beim oder nach dem Zerkleinern unter Hochdruck und einem nachfolgenden Entspannen ausgesetzt, woraufhin der zerkleinerte Fruchtbrei der Vollmantel-Schneckenzentrifuge zugeführt wird. Diese trennt den eintretenden Brei in Öl und Orujo (Wasser-/Feststoffgemisch) bzw. "Alpeorujo" auf.

Zum Stand der Technik seien ferner noch die EP 0 718 397 A1; die WO2007/042742 A1 und die WO 2007/118920 A1 sowie die WO 2006/005986A1 und die WO 2005/021695 A1 genannt. Die WO 2007/042742 offenbart die Herstellung eines Olivenpulvers unter anderem aus Alperujo, das einer alkalischen Behandlung in Kombination mit einer natürlichen Fermentation in Lake unterworfen wird. Das Wasser wird über ein Filter oder Zentrifugation vor einer Zugabe der Lake abgezogen. Für die alkalische Behandlung sind unter anderem Lösungen oder Suspensionen mit einer Reihe von Calziumverbindungen, u.a. Calziumcarbonat und calziumhydroxid vorgesehen. Die Zugabe der Suspensionen oder Lösungen erfolgt unter kontinuierlichem Rühren.

Die EP 0 557 758 A1 offenbart ein Verfahren zur Gewinnung von Olivenöl, bei dem mittels einer Mühle ein Fruchtbrei hergestellt wird, der in einem Mischer aufgeschlossen und anschliessend einer Vollmantelschneckenzentrifuge zwecks Abtrennung des Öles aus dem Fruchtbrei zugeführt wird. Dabei kann beim Einsatz frischer Oliven die Herstellung des Fruchtbreis ohne Wasserzugabe, bei Einsatz eingetrockneter Oliven entsprechend dem Zustand der Oliven unter geringer Wasserzugabe erfolgen. Der aufgeschlossene Fruchtbrei wird in einem sogenannten Zweiphasen-Verfahren insbesondere in einer Zweiphasen-Vollmantelschneckenzentrifuge in Öl und in ein Feststoff-Wasser-Gemisch, "Alpeorujo" genannt, aufgetrennt. Das Feststoff-Wasser-Gemisch ist für eine nachfolgende Extraktion und Trocknung geeignet. Diese Vorgehensweise ist aber nicht immer gewünscht.

Es stellt sich daher die Frage nach einer vorteilhaften Weiterverarbeitung des Alpeorujo, wobei der Restfeuchtegehalt auf bis zu 50% oder weniger gesenkt werden soll. Die Lösung dieses Problems ist die Aufgabe der Erfindung. Es soll also ein vorteilhaftes Verfahren zur Weiterverarbeitung des Alpeorujo bereitgestellt werden, das im Anschluss an das bzw. ein Zweiphasen-Verfahren zur Ölgewinnung durchgeführt werden kann.

Die Erfindung löst diese Aufgabe durch die Merkmale des Anspruchs 1. Ein erfindungsgemäßes Verfahren zur Aufarbeitung von Alpeorujo weist zumindest die folgenden Schritte auf: a) Bereitstellen von Alpeorujo; b) Zugabe einer Calciumverbindung und/oder einer Calciumlösung zu dem Alpeorujo; und c) Klären des Alpeorujo unter Bildung einer Feststoffphase und einer Flüssigkeitsphase in einer ersten Trennvorrichtung, wobei der Schritt b) vor dem Schritt c) erfolgt.

Durch die Zugabe von Calcium in Form der Calziumverbindung bilden sich kompaktere Feststoffteilchen im Alpeorujo aus. Gleichzeitig wird aufgrund des kompakteren Aufbaus der Feststoffteilchen weniger Flüssigkeit durch den Feststoffanteil des Alpeorujo gebunden bzw. im Alpeorujo zurückgehalten. Diese freigewordene Flüssigkeit lässt sich mechanisch Abtrennen, so dass eine Aufarbeitung von Alpeorujo auch in Hinblick auf die Endlagerung und auf eine verfahrensökonomische Prozessführung ermöglicht wird. Durch das mechanische Abtrennen der Flüssigphase aus dem Alpeorujo kann der Restfeuchtegehalt in der flüssigkeitsreduzierten Feststoffphase auf bis zu 50% oder weniger gesenkt werden.

Die Effekte der Zugabe an Calziumverbindung bestehen in einer umfangreicheren Abtrennung von Flüssigkeit bzw. Likör. Der Feststoff ist direkt deponiefähig. Aus dem Likör können nach einer Phasentrennung und ggf. einer Weiterverarbeitung noch weitere Wertprodukte (insbesondere Polyphenole und/oder eine Ölphase) gewonnen werden.

Vorteilhafte Ausgestaltungen der Erfindung sind Gegenstand der Unteransprüche.

Als Calciumquelle bzw. -verbindung kann vorteilhaft Calziumoxid bzw. Kalk (Lebensmittelzusatzstoff E 529) oder als Caziumhydroxid Löschkalk (Lebensmittelzusatzstoff E 526) und/oder als Calcium(salz)lösung z.B. Wollastonit zum Alpeorujo zugegeben werden. Durch die alkalische pH-Wertverschiebung durch die Zugabe dieser Kalke, Basen oder Salzlösungen bzw. deren Gemische werden vorteilhaft auch Polyphenole aus dem Alpeorujo in die abgetrennte Flüssigphase verschoben. Diese können im Anschluss durch zusätzliche Verfahrensschritte einfach aus der Flüssigphase isoliert werden. Diese optionale Gewinnung von Polyphenolen macht das neue Verfahren noch wirtschaftlicher.

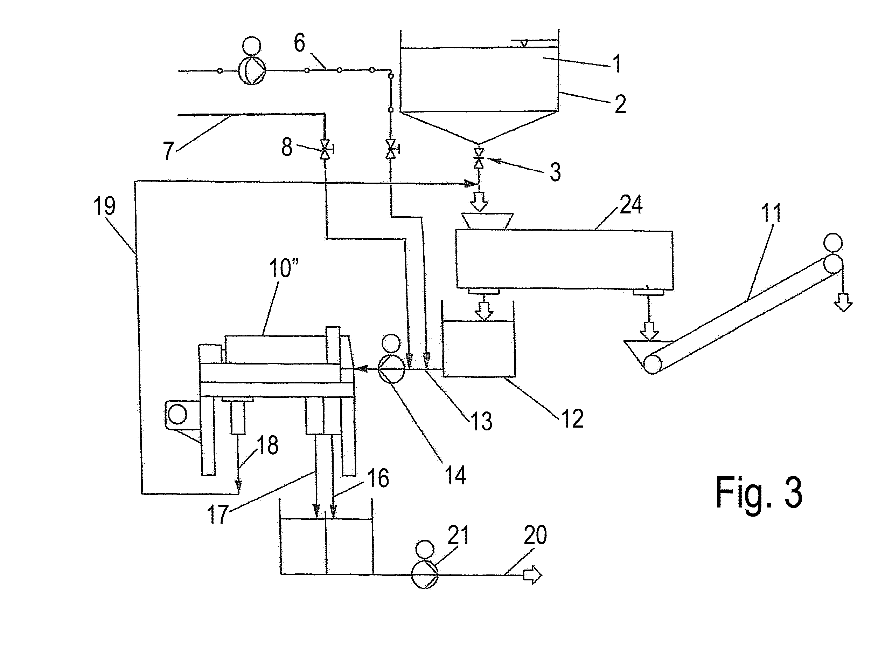

Es ist zudem von Vorteil, wenn nach dem Bereitstellen von Alpeorujo, gemäß Schritt a), und vorzugsweise vor der Zugabe der Calciumverbindung und/oder der Calciumlösung, gemäß Schritt b), ein mechanisches Abtrennen von Kernen aus zumindest einer Teilmenge der Gesamtmenge oder aus der Gesamtmenge an Alpeorujo im Anschluss an eine Olivenölgewinnung erfolgt. Diese Kerne sind deponiefähig oder können beispielsweise als Brennstoff verwendet werden (siehe auch Fig. 3). Dabei weist eine derartige weitgehend kernfreie Alpeorujomasse typischerweise einen Feuchtegehalt von 70-75%, bezogen auf die Gesamtmasse an Alpeorujo, und eine teilweise kernfreie Alpeorujomasse einen Feuchtegehalt von 65-70% auf.

Bislang konnte eine mechanische Entwässerung bei derart schlammig feuchten Massen nur bis zu einem Restfeuchtegehalt der Feststoffphase von 60-64% erfolgen. Mit dem erfindungsgemäßen Verfahren ist es jedoch möglich, auf mechanischem Wege eine Entwässerung durchzuführen, wobei die Feststoffphase die hierbei gewonnen wird, nur noch einen Restfeuchtegehalt von 50% ± 5% aufweist. Diese verbleibende Feststoffphase ist z.B. deponiefähig.

Die Menge an zugesetztem Kalk sollte vorteilhafterweise maximal 5%, vorzugsweise 2-3%, bezogen auf das Gesamtgewicht an Alpeorujo, an Kalk bzw. Calciumoxid zu dem Alpeorujo betragen. Bei einer höheren Zugabe an Kalk wird Flüssigkeit durch den Kalk gebunden und kann nicht durch mechanisches Abtrennen aus dem Alpeorujo entfernt werden. Um eine möglichst große Menge an Flüssigkeit aus dem Alpeorujo zu entfernen, hat sich die mengenmäßige Zugabe von Kalk von 2-3% als besonders günstig erwiesen.

Ausgehend von der Menge an zugesetztem Kalk kann auch Löschkalk, also Calciumhydroxid, und/oder Kalkwasser dem Alpeorujo in einer derartigen Menge zugegeben werden, dass sie der Menge an zugegebenen Kalk entspricht.

Das mechanische Abtrennen einer Flüssigphase aus dem Alpeorujo unter Bildung einer flüssigkeitsreduzierten Feststoffphase kann durch eine Trennvorrichtung insbesondere in einer Presse erfolgen.

Dabei erfolgt die Verarbeitung nach einem oder mehreren der Ansprüche 1 bis 16 zeitlich vor dem Einsetzen einer nennenswerten Gärung/Fermentation des Produktes.

Als Presse ist insbesondere eine Schneckenpresse geeignet. Alternativ kann als Presse beispielsweise auch eine Bandpresse eingesetzt werden.

Alternativ kann das Abtrennen mit einem Dekanter oder einer Filtervorrichtung erfolgen.

Insgesamt hat sich die Verwendung eines Dekanters oder Presse als besonders vorteilhaft erwiesen, da der Anteil an kolloidalen Feststoffen in der abgetrennten Flüssigphase nach dem Schritt c) vergleichsweise gering war.

Die Zugabe des Calciumoxids und/oder der Calciumlösung kann vorteilhaft durch eine Dosieranlage, vorzugsweise als eine Pulver-in-Brei Dosierung oder durch Verwendung einer Pulverdosiermaschine, erfolgen. Die bei der Zugabe durch die exothermische chemische Reaktion sich entwickelnde Wärme, kann durch die Kalkmenge in der Dosieranlage gesteuert werden. Darüber hinaus ermöglicht eine Dosieranlage eine materialsparende Zugabe des entsprechenden Calciumoxids.

Die Prozesssteuerung kann vorteilhaft über die Ermittlung und den Abgleich der Temperaturänderung in den einzelnen Verfahrensstufen erfolgen.

Ein besonders hoher Anteil an Flüssigphase nach dem mechanischen Abtrennen gemäß Schritt c) konnte bei der Aufarbeitung von frischem Alpeorujo festgestellt werden. Daher ist es von Vorteil, dass die Aufarbeitung des Alpeorujo von dessen Bereitstellen, gemäß Schritt a), bis zum mechanischen Abtrennen der Flüssigphase aus dem Alpeorujo unter Bildung der flüssigkeitsreduzierten Feststoffphase, gemäß Schritt c), nach der Erfindung innerhalb von maximal 1 Stunde, vorzugsweise innerhalb von 30 Minuten, erfolgt.

Weiterhin konnte eine Verringerung des Restfeuchtegehaltes in der flüssigkeitsreduzierten Feststoffphase erreicht werden, indem man das Alpeorujo aus Oliven mit einem Reifegrad von 4-5, ausgehend von einer Skala von 1-7, verwendet, wobei der Reifegrad 7 die Überreife einer Olive angibt.

Bei Alpeorujo, welches aus Oliven mit einem Reifegrad von 6-7 gewonnen wird oder welches eine Standzeit vor dem mechanischen Abtrennen der Flüssigphase, gemäß Schritt c), von mehr als 5h aufweist, hat sich ein Zudosieren von Pektin vor dem mechanischen Abtrennen der Flüssigphase, gemäß Schritt c), als günstig erwiesen, um genügend Feststoffe aus dem Alpeorujo abzutrennen.

Die in Schritt c) entstandene Flüssigphase kann in einer weiteren Trennvorrichtung unter Bildung einer Feststoffphase, einer wässrigen Phase und ggf. einer Ölphase weiter aufgearbeitet werden. Besonders vorteilhaft hat sich dabei die Gewinnung von Polyphenolen aus der wässrigen Phase durch Aufkonzentrieren der wässrigen Phase und/oder durch Adsorption erwiesen. Dadurch kann ein zusätzlicher Wertstoff aus einem Stoffgemisch gewonnen werden, welches bislang stets als unerwünschter Abfall verworfen wurde. Die wässrige Phase kann entsorgt werden (Kläranlage).

Die Reste an Feststoffphase, welche bei der Aufarbeitung der Flüssigphase mit einer Dreiphasentrennung nach Schritt d) anfallen, kann auch in den Prozess rückgeführt werden. Dadurch braucht diese Feststoffphase nicht gesondert gelagert zu werden.

Vorzugsweise weist eine Anlage zur Aufarbeitung von Alpeorujo zumindest eine Mischvorrichtung, eine Dosieranlage zur Zudosierung einer Calziumverbindung und/oder einer Calziumlösung, welche in die Mischvorrichtung mündet und eine Trennvorrichtung auf, in welche der Zulauf des Alpeorujo von der Mischvorrichtung aus erfolgt und die ein mechanisches Abtrennen einer Flüssigphase unter Bildung einer flüssigkeitsreduzierten Feststoffphase ermöglicht.

Durch die Dosieranlage kann eine präzise und kontrollierte Zugabe von Calziumverbindung oder -lösung zum Alpeorujo und eine gleichmäßige Verteilung derselben bzw. desselben in dem Alpeorujo erfolgen.

Die abgetrennten Feststoffe werden aus der ersten Trennvorrichtung 10 (vorzugsweise eine Presse, insbesondere Schneckenpresse, eine Doppelschneckenpresse, eine Zentrifugalfeldtrennung, insbesondere ein Dekanter und/oder ein Filter) abgeführt und über ein Transportband 11 abtransportiert. Die abgeführten Feststoffe können anschließend beispielsweise als Brennmaterial verwendet werden.

Die abgetrennte Flüssigkeit wird in einen zweiten Vorratstank 12 überführt. Die abgetrennte Flüssigkeit wird auch als "Likör" bezeichnet. Dieser Likör weist einen hohen Wassergehalt, einen Anteil an gelösten und suspendierten Feststoffen und einen Restölgehalt auf.

Zur optionalen Weiterverarbeitung des Likörs kann eine zweite Trennvorrichtung 15 - beispielsweise ein Drei-Phasen-Dekanter - eingesetzt werden, welcher weitere verbliebene Feststoffe aus der Flüssigkeit entfernt und den Anteil an Restöl von der wässrigen Phase trennt.

Dieser Dekanter ist über eine zweite Überführungsleitung 13 mit dem zweiten Vorratstank 12 verbunden, so dass der Likör über die zweite Überführungsleitung 13 mittels einer Pumpe 14 in den Dekanter 15 überführbar ist.

Die Feststoffe werden aus dem Dekanter 15 durch die erste Ableitung 18 abgeführt, während die Ölphase und die Wasserphase über die zweite und dritte Ableitung 17 (Ölphase) und 16 (wässrige Phase) aus dem Dekanter in entsprechende Tanks abgeleitet werden. Die abgetrennten Feststoffe können über eine Rückführung 19 in die Überführungsleitung 9 rückgeführt werden.

Die wässrige Phase 16 kann aus dem Lagerbehältnis über eine vierte Ableitung 20 mittels einer zweiten Pumpe 21 abgeführt werden oder zur Weiterverarbeitung an weitere nicht dargestellte Vorrichtungen weitergeleitet werden.

Besonders vorteilhaft können aus der wässrigen Phase Polyphenole gewonnen werden. Hierfür wird in einem nicht dargestellten Aufarbeitungsverfahren die wässrige Phase aufkonzentriert. Dies erfolgt durch Eindampfen oder durch CFF (Cross-Flow-Filtration). Die Polyphenolgewinnung erhöht insbesondere die Wirtschaftlichkeit, da Polyphenole ein wertvolles Nebenprodukt darstellen.

Die vorteilhafte Möglichkeit zur Polyphenolgewinnung ergibt sich dadurch, dass die wässrige Phase alkalisch ist (PH-Wert ca. 12 - 14), so dass die Polyphenole getrennt von Zuckern in der Lösung vorliegen. Hierdurch sind die Polyphenole besonders gut zugänglich.

Alternativ oder zusätzlich zum Konzentrieren der wässrigen Phase können auch Polyphenole mittels Adsorbentien aus der wässrigen Phase gewonnen werden. Geeignete Adsorbentien sind beispielsweise Bentonit, Zellulose oder ähnliche. Optional kann die Mischvorrichtung 4 eine zusätzliche Zuleitung 6 zum Einleiten von Pektinen aufweisen.

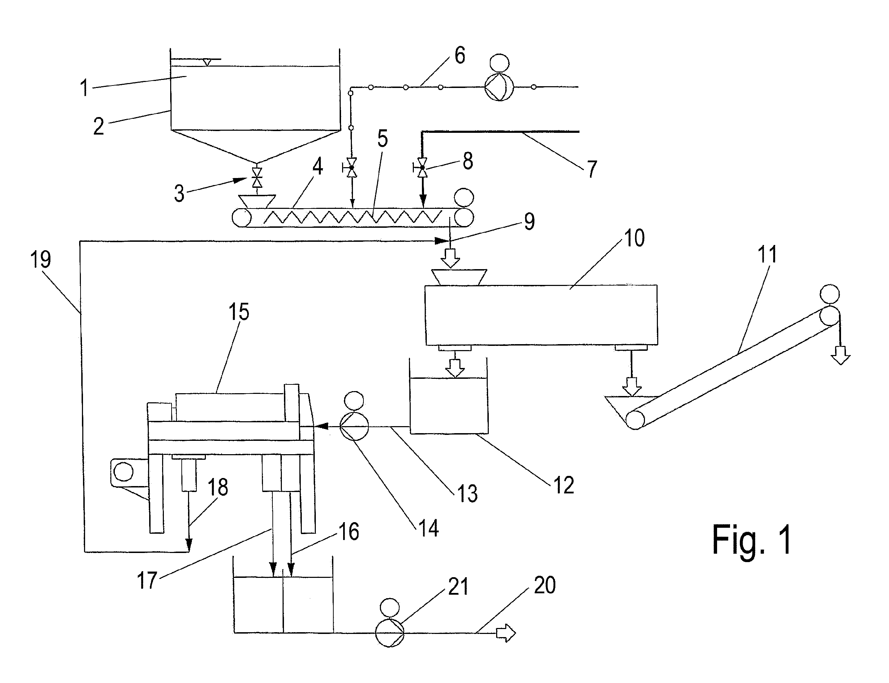

Nachfolgend wird eine Variante eines Verfahrens zur Entwässerung von Alpeorujo anhand der Fig.1 näher beschrieben.

Nach der Bildung von Alpeorujo können aus diesem Trester vor der eigentlichen Entwässerung Kerne entfernt werden. Somit wird der Anlage in Fig.1 Alpeorujo direkt aus dem Ölgewinnungsverfahren zugeführt oder bevorzugt kernreduzierter Alpeorujo der Anlage zugeführt.

In einer dritten und ebenfalls bevorzugten Variante kann auch ein Gemisch aus Alpeorujo eingesetzt werden, wobei aus einem Teil des Gemisches vorher Kerne entfernt wurden und ein anderer Teil des Gemisches direkt aus dem Ölgewinnungsverfahren abgeführt und folglich nicht entkernt wurde.

Der Feuchtegehalt bei unbehandelten bzw. nicht-entkernten Alpeorujo beträgt typischerweise 60-65%. Der Feuchtegehalt von kernreduzierten Alpeorujo beträgt typischerweise 70-75%. Der Feuchtegehalt des Gemisches aus beiden Alpeorujoarten beträgt typischerweise zwischen 65-70%.

Der Alpeorujo wird nach dem Schritt des optionalen Entfernens von Kernen mit Kalk oder Löschkalk versetzt. Die Zugabe von Kalk oder Löschkalk kann auch in Form von Kalkwasser erfolgen. Im Anschluss oder zeitgleich mit der Zugabe von Kalk, Löschkalk oder Kalkwasser erfolgt ein Vermischen mit dem Alpeorujo. Durch die Zugabe von Kalk, Löschkalk oder Kalkwasser werden kompaktere Feststoffe gebildet und mehr Flüssigkeit freigesetzt.

Die Menge an zugegebenen Kalk, also Calciumoxid CaO, beträgt vorzugsweise 2-3%, bezogen auf das Gewicht des Alpeorujo. Die Menge an zugegebenen Löschkalk, also Calciumhydroxid Ca(OH)₂, ist dementsprechend aufgrund der höheren zwischen 2,5-4%, bezogen auf das Gewicht des Alpeorujo. Die Menge des alternativ zugegebenen Kalkwassers sollte derart gewählt werden, dass die Menge an zugegebenen Kalk bzw. Calciumoxids im Kalkwasser ebenfalls ca. 2-3% bezogen auf das Gewicht des Alpeorujo beträgt.

Es ist allerdings alternativ möglich ein Gemisch aus festem Kalk oder Löschkalk und Kalkwasser dem Alpeorujo zuzugeben.
Eine höhere Menge an Kalk im Alpeorujo wirkt sich nachteilig aus, da Flüssigkeit nur im verringerten Maße freigesetzt wird bzw. die Trennung von Feststoffen und Flüssigkeit im Alpeorujo nur im verringerten Maße erfolgt und dadurch ein geringerer Anteil an Flüssigphase aus dem Alpeorujo entfernt wird. Hierfür nimmt allerdings bei höherer Dosage an Kalk, vorzugsweise im Bereich zwischen 3-5%, der Anteil an kolloidalen Feststoffen in der Flüssigphase von 13% auf 8% ab.

Ein besonders hoher Anteil an Flüssigkeit bzw. Likör kann aus dem kernfreien oder kernreduzierten Alpeorujo gewonnen werden. Durch die Zugabe von Kalk kann durch die anschließende Entwässerung der Feststoffe bis auf einen Restfeuchtegehalt von 50% (±5%) erfolgen. Derartige teilentkernte Trester waren derart schlammig und pastös, dass eine mechanische Entwässerung der Feststoffe nur bis auf einen Restfeuchtegehalt von ca. 60-64% erfolgen konnte.

Im Anschluss an die Zugabe von Kalk, Löschkalk oder Kalkwasser und das Vermischen von Kalk, Löschkalk oder Kalkwasser mit dem Alpeorujo erfolgt die Phasentrennung bzw. das Abpressen von Flüssigkeit aus dem Alpeorujo. Dies kann besonders bevorzugt durch einen Dekanter erfolgen, da bei dieser mechanischen Trennvorrichtung zur Entwässerung die abgegebene Flüssigphase einen besonders geringen Anteil an kolloidalen Feststoffen aufweist. Alternativ können allerdings auch Schneckenpressen, Bandpressen oder Filtervorrichtungen eingesetzt werden.

Optional kann im Anschluss an die vorgenannte Phasentrennung bzw. das Abpressen von Flüssigkeit aus dem Alpeorujo eine Aufarbeitung des abgepressten Likörs erfolgen.

Hierfür wird der Likör einer weiteren Phasentrennung in eine Feststoffphase und eine wässrige Phase, sowie optional einer Ölphase, unterzogen. Diese Phasentrennung kann beispielsweise in einem Dekanter erfolgen.

Die abgetrennte Feststoffphase kann vorteilhaft in den Alpeorujo vor dem Schritt der Entwässerung rückgeführt werden, so dass keine zusätzliche Feststoffphase als Abfall anfällt.

Sofern eine Ölphase anfällt, so kann diese getrennt aufgearbeitet werden.

Aus der wässrigen Phase können Polyphenole gewonnen werden, welche beispielsweise als Fungizide in der Landwirtschaft eingesetzt werden können.

In einer ersten Variante zur zusätzlichen Gewinnung von Polyphenolen erfolgt ein Konzentrieren der wässrigen Phase. Dies erfolgt vorzugsweise durch Wasserentzug, beispielsweise durch Eindampfen oder durch CFF. Die zusätzliche Gewinnung von Polyphenolen kann auch alternativ durch Adsorption dieser Substanzen erfolgen. Als Adsorbentien werden vorzugsweise Bentonit oder Cellulose verwandt. Das Aufkonzentrieren der wässrigen Phase kann auch vorteilhaft mit der Adsorption kombiniert werden.

Eine besonders hohe Ausbeute an Likör bzw. abgepresster Flüssigkeit aus dem Alpeorujo ergibt sich, sofern der Alpeorujo frisch, also direkt im Anschluss an die Olivenölgewinnung dem vorgenannten Verfahren der Entwässerung, mit oder ohne vorheriger Abtrennung der Kerne, unterzogen wird. Die Entwässerung des Alpeorujo sollte vorzugsweise innerhalb von maximal 5h, vorzugsweise weniger als 1 h, vorzugsweise jedoch innerhalb von 30 min, nach der Olivenölgewinnung erfolgen. Innerhalb der besagten 30 min bildet sich ein stabiler Filterkuchen aus, welcher bei Überschreiten dieses Zeitraumes zunehmend geringere Stabilität aufweist.

Bei der Zugabe von Kalk findet eine Temperaturerhöhung des Alpeorujo statt. Dabei hat sich gezeigt, dass die Steuerung der Entwässerung in Abhängigkeit von der Temperatur erfolgen kann.

Neben dem Alter des Alpeorujos, spielt auch der Reifegrad der Oliven eine Rolle bei der Verarbeitung. Besonders gute Ergebnisse mit einem Feuchtigkeitsgrad der Feststoffphase nach dem Abpressen von weniger als 50% konnten bei Oliven erreicht werden, welche einen Reifegrad von 4 bis 5 auf einer Skala von 1-7 aufwiesen, wobei 7 für überreife Oliven steht. Bei der Verarbeitung von sehr reifen und überreifen Oliven empfiehlt sich ein zusätzliches Zudosieren von Pektinen. Besonders bevorzugt ist dabei eine Zugabe an Pektinen von 1-2%, bezogen auf das Gesamtgewicht an Alpeorujo.

Durch den Zusatz der Calziumverbindung, insbesondere Kalk, Löschkalk oder Kalkwasser gehen die natürlichen im Alpeorujo enthaltenen Pektine mit Calcium Verbindungen ein und bilden somit kompaktere Feststoffverbände aus. Unterstützt wird dieser Effekt durch den Einsatz alkalischer Ca-Salze zur Bildung kompakter Feststoffe im Alpeorujo unter Freisetzung von Flüssigkeit.

Ein besonderer Vorteil des Verfahrens wird in der Gewinnung der polyphenolreichen Wasserphase gesehen. Die Gewinnung dieses Produktes bei der Verarbeitung des Alpeorujo wird dadurch begünstigt, dass die Polyphenole bei Zugabe der alkalischen Ca-Salze, insbesondere bei Zugabe von Kalk, Löschkalk oder Kalkwasser aufgrund der pH-Wertänderung aus dem Alpeorujo in die Likörphase bzw. in die Flüssigphase verschoben werden.

Die anschließende Bearbeitung des Likörs ermöglicht die Gewinnung der Polyphenole.

Nach der Fig. 1 erfolgt Schritt "b", die Zugabe einer Calciumverbindung und/oder einer Calciumlösung zu dem Alpeorujo, zeitlich "vor" dem Schritt "c", das heißt vor einem ersten bzw. dem Klären des Alpeorujo unter Bildung einer Feststoffphase und wenigstens einer Flüssigkeitsphase in einer ersten Trennvorrichtung.

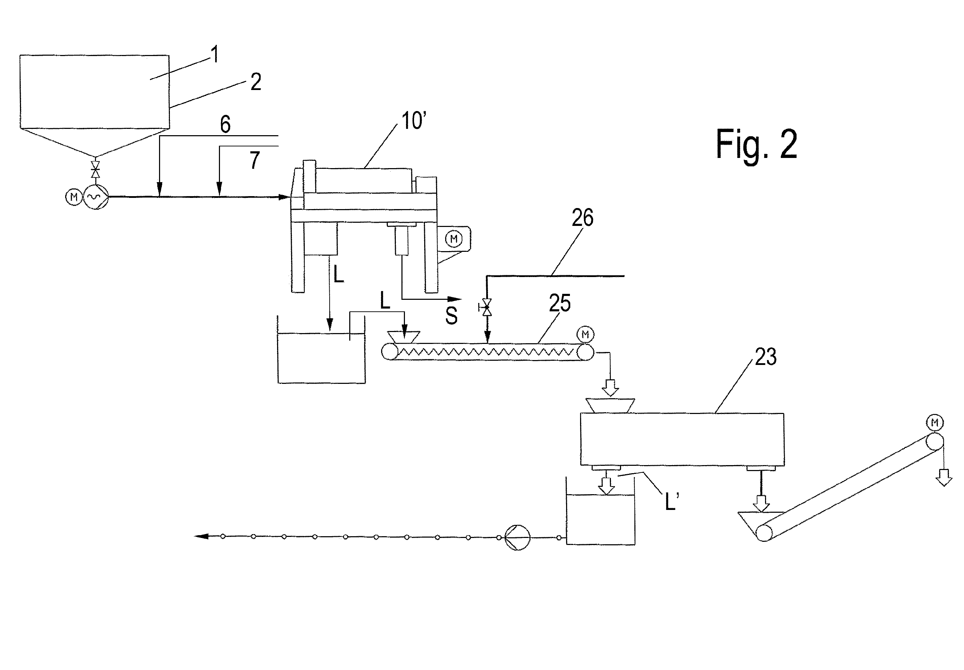

Auch nach Fig. 2 erfolgt Schritt "b" vor Schritt "c". Allerdings wird hier als erste Trennvorrichtung 10' zum Durchführen von Schritt "c" ein Dekanter 10' eingesetzt. Es erfolgt vorzugsweise direkt eine Zweiphasentrennung in eine Flüssigkeitsphase L und eine Feststoffphase S. Die Feststoffphase S ist dabei gut entwässert und deponiefähig.

Die aus dem Dekanter 10' abgeleitete Flüssigkeitsphase L kann optional mittels einer weiteren Trennvorrichtung 23 (z.B. einer Presse) von weiteren Feststoffen S geklärt werden, so dass der Feuchtegehalt im feststoffreduzierten Schlamm L' auf über 80% ansteigen kann. Zwischen dem Dekanter und der weiteren Trennvorrichtung 23 kann eine Zugabe weiterer Stoffe (z.B. Bentonit oder Flockungsmittel) erfolgen, z.B. in einem Mischer 25 durch eine Leitung 26.

Die Flüssigkeitsphase(n) kann ggf. weiterverarbeitet werden, beispielsweise mit einem weiteren Dekanter in eine wässrige Phase und eine Ölphase getrennt werden (beispielsweise nach Art der Verarbeitung nach der ersten Trennvorrichtung 10 in Fig. 1).

Nach Fig. 3 erfolgt eine Art "Vorklären" des zu verarbeitenden Alpeorujos mit einer Trennvorrichtung 24'. Diese erste Kern- und ggf. weitere Feststoffphasenabtrennung (auch Häute oder dgl.) erfolgt bevorzugt mit einer Presse. Es kann auch (oder ergänzend) eine Abtrennung im Wesentlichen nur von Kernen beispielsweise mit einem Kernseparator erfolgen (Siebseparator; hier nicht dargestellt).

Die Flüssigkeitsphase wird sodann weiter verarbeitet, wozu nach dem Vorklären bei 7 zumindest die "Kalkzugabe" erfolgt. Auch erfolgt hier wiederum die optionale Zugabe von Pektinen durch die Zuleitung 6 nach dem Abtrennen der Kerne. Sodann erfolgt Schritt "c", also dass eigentliche Klären des vorgeklärten Alpeorujos in einer Trennvorrichtung 10", die hier ein Dreiphasendekanter ist. Auch mit dieser Verfahrensvariante werden gute Ergebnisse erzielt.

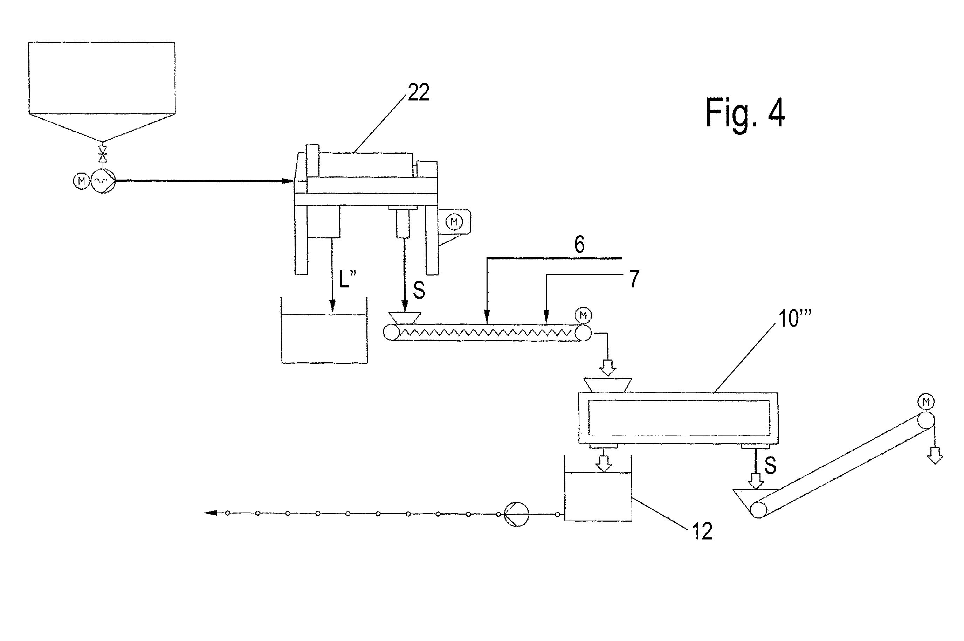

In Fig. 4 wird der Spezialfall einer vorangestellten Öl-Wasser - Emulsionsabtrennung L" mittels eines Dekanters 22 dargestellt, was in Einzelfällen sinnvoll sein kann. Dazu kann ein Zweiphasendekanter verwendet werden. In der vorgeschalteten Trennvorrichtung 22 erfolgt das Abtrennen der Emulsion. Die noch relativ dünnflüssige "Feststoffphase" S wird weiter von Feststoffen getrennt.

Dann erfolgt die "Kalkzugabe" bei 6 (und ggf. eine Pektinzugabe bei 7) in diese Feststoffphase S, die sodann in der Trennvorrichtung 10'" weiter entwässert wird. Sodann ist die weiter entwässerte Feststoffphase S deponiefähig. Die Flüssigkeitsphase kann ggf. wiederum weiterverarbeitet werden, beispielsweise mit einem weiteren Dekanter 15, beispielsweise entsprechend zu Fig. 1.

In sämtlichen Leitungen können ggf. hier nicht dargestellte Einrichtungen wie Dosierventile oder Pumpen oder dgl. angeordnet sein.

### Bezugszeichen

- 1: Alpeorujo
- 2: Vorratstank
- 3: Ablaufventil
- 4: Mischvorrichtung
- 5: Schnecke
- 6: Zuleitung
- 7: Zuleitung
- 8: Ventil
- 9: Überführungsleitung
- 10: Trennvorrichtung (10', 10", 10'")
- 11: Transportband
- 12: Vorratstank
- 13: Überführungsleitung
- 14: Pumpe
- 15: Trennvorrichtung
- 16: Ableitung
- 17: Ableitung
- 18: Ableitung
- 19: Rückführung
- 20: Ableitung
- 21: Pumpe
- 22: Dekanter
- 23: Trennvorrichtung
- 24: Trennvorrichtung
- 25: Mischer
- 26: Leitung

## Patentansprüche

1. Verfahren zur Aufarbeitung von Alpeorujo, welches zumindest die folgenden Schritte aufweist:
a) Bereitstellen von Alpeorujo;
b) Zugabe einer Calciumverbindung und/oder einer
Calciumlösung zu dem Alpeorujo; und
c) Klären des Alpeorujo unter Bildung einer Feststoffphase und wenigstens einer Flüssigkeitsphase in einer ersten Trennvorrichtung (10, 10', 10", 10"'), wobei der Schritt b) vor dem Schritt c) erfolgt und wobei die Aufarbeitung des Alpeorujo von dessen Bereitstellen, gemäß Schritt a), bis zum mechanischen Abtrennen der Flüssigphase aus dem Alpeorujo unter Bildung der flüssigkeitsreduzierten Feststoffphase, gemäß Schritt c), innerhalb von maximal 1 Stunde erfolgt.

2. Verfahren nach Anspruch 1, **dadurch gekennzeichnet, dass** die Calciumverbindung Calziumoxid auch genannt Brandkalk ist oder dass die Calciumverbindung Calziumhydroxid auch genannt Löschkalk ist oder dass die Calciumverbindung oder die Calziumlösung ein Calziumsalz ist.

3. Verfahren nach Anspruch 2, **dadurch gekennzeichnet, dass** als das Calciumsalz Wollastonit zum Alpeorujo zugegeben wird.

4. Verfahren nach einem der vorstehenden Ansprüche, **dadurch gekennzeichnet, dass** nach dem Bereitstellen von Alpeorujo, gemäß Schritt a), und vorzugsweise vor der Zugabe der Calciumverbindung und/oder der Calciumlösung, gemäß Schritt b), ein mechanisches Abtrennen von Kernen zumindest einer Teilmenge der Gesamtmenge an Alpeorujo im Anschluss an eine Olivenölgewinnung erfolgt.

5. Verfahren nach einem der vorstehenden Ansprüche, **dadurch gekennzeichnet, dass** nach dem Bereitstellen von Alpeorujo, gemäß Schritt a), und vorzugsweise vor der Zugabe der Calciumverbindung und/oder der Calciumlösung, gemäß Schritt b), eine mechanische Abtrennung einer Phase, vorzugsweise einer Öl-Wasser-Emulsion, erfolgt.

6. Verfahren nach einem der vorhergehenden Ansprüche, **dadurch gekennzeichnet, dass**
- eine Menge von maximal 5%, vorzugsweise 2-3%, bezogen auf das Gesamtgewicht an Alpeorujo, an Kalk zu dem Alpeorujo zugegeben wird, oder
- eine Menge an Löschkalk und/oder Kalkwasser dem Alpeorujo zugegeben wird, welche der Konzentration an Calcium im Alpeorujo. bei Zugabe einer Menge von maximal 5%, vorzugsweise 2-3%, bezogen auf das Gesamtgewicht an Alpeorujo, an Kalk zu dem Alpeorujo entspricht.

7. Verfahren nach einem der vorhergehenden Ansprüche, **dadurch gekennzeichnet, dass** das mechanische Klären nach Schritt c) mittels einer Presse als Trennvorrichtung erfolgt und/oder dass das mechanische Klären nach Schritt c) mittels einer Schneckenpresse erfolgt und/oder dass das mechanische Klären nach Schritt c) mittels eines Dekanters als Trennvorrichtung erfolgt und/oder dass das mechanische Klären nach Schritt c) mittels einer Filtervorrichtung als Trennvorrichtung erfolgt.

8. Verfahren nach einem der vorhergehenden Ansprüche, **dadurch gekennzeichnet, dass** die Zugabe der Calciumverbindung durch eine Dosieranlage, vorzugsweise als eine Pulver-in-Brei Dosierung oder durch Verwendung einer Pulverdosiermaschine, erfolgt.

9. Verfahren nach Anspruch 8, **dadurch gekennzeichnet, dass** die Zugabe der Calciumlösung durch eine Flüssig-Flüssig - Dosieranlage erfolgt.

10. Verfahren nach einem der vorhergehenden Ansprüche, **dadurch gekennzeichnet, dass** eine Prozesssteuerung durch Ermittlung der Temperatur des Alpeorujo, vor und/oder nach der Zugabe der Calciumverbindung, gemäß Schritt b), und/oder vor und/oder nach dem mechanischen Abtrennen der Flüssigphase, gemäß Schritt c), erfolgt.

11. Verfahren nach einem der vorhergehenden Ansprüche, **dadurch gekennzeichnet, dass** die Aufarbeitung des Alpeorujo von dessen Bereitstellen, gemäß Schritt a), bis zum mechanischen Abtrennen der Flüssigphase aus dem Alpeorujo unter Bildung der flüssigkeitsreduzierten Feststoffphase, gemäß Schritt c), innerhalb von 30 Minuten, erfolgt.

12. Verfahren nach einem der vorhergehenden Ansprüche, **dadurch gekennzeichnet, dass** das Alpeorujo aus Oliven mit einem Reifegrad von 4-5, ausgehend von einer Skala von 1-7, gewonnen wird, wobei der Reifegrad 7 die Überreife einer Olive angibt.

13. Verfahren nach einem der vorhergehenden Ansprüche, **dadurch gekennzeichnet, dass** zu Alpeorujo, welches aus Oliven mit einem Reifegrad von 6-7 gewonnen wird oder welches eine Standzeit vor Schritt c), von mehr als 1 h aufweist, zusätzliches Pektin vor dem mechanischen Abtrennen der Flüssigphase, gemäß Schritt c), zudosiert wird.

14. Verfahren nach einem der vorhergehenden Ansprüche, **dadurch gekennzeichnet, dass** das Verfahren zur Aufarbeitung von Alpeorujo einen weiteren Schritt d) ein Aufarbeiten der Flüssigphase aus Schritt c) in einer zweiten Trennvorrichtung (15), insbesondere in einem Dekanter, unter Bildung einer Feststoffphase, einer wässrigen Phase und ggf. einer Ölphase umfasst.

15. Verfahren nach einem der vorstehenden Ansprüche, **dadurch gekennzeichnet, dass** Polyphenole aus der wässrigen Phase gewonnen werden, insbesondere derart, dass die Polyphenole aus der wässrigen Phase durch Aufkonzentrieren der wässrigen Phase und/oder durch Adsorption gewonnen werden.

16. Verfahren nach einem der vorstehenden Ansprüche, **dadurch gekennzeichnet, dass** die Feststoffphase, welche bei der Aufarbeitung der Flüssigphase gebildet wird, zu dem Alpeorujo vor dem mechanischen Abtrennen einer Flüssigphase, gemäß Schritt c) rückgeführt wird.

## Claims

1. Method for processing wet olive pomace, which comprises at least the following steps:
a) providing wet olive pomace;
b) adding a calcium compound and/or a calcium solution to the wet olive pomace; and
c) filtering the wet olive pomace in a first separating device (10, 10', 10" , 10''') to obtain a solid phase and at least one liquid phase, wherein the step b) takes place prior to step c) and wherein processing the wet olive pomace from its provision, according to step a), up to the mechanical separation of the liquid phase from the wet olive pomace by forming the liquid-reduced solid phase, according to step c), takes place within 1 hour maximum.

2. Method according to Claim 1, **characterized in that** the calcium compound is calcium oxide, also called quicklime, or **in that** the calcium compound is calcium hydroxide, also called slaked lime, or **in that** the calcium compound or the calcium solution is a calcium salt.

3. Method according to Claim 2, **characterized in that** wollastonite is added to the wet olive pomace as the calcium salt.

4. Method according to one of the preceding claims, **characterized in that** after providing the wet olive pomace, according to step a), and preferably before adding the calcium compound and/or the calcium solution, according to step b), a mechanical separation of the stones from at least a proportion of the total amount of wet olive pomace is carried out following the olive oil extraction.

5. Method according to one of the preceding claims, **characterized in that** after providing the wet olive pomace, according to step a), and preferably before adding the calcium compound and/or calcium solution, according to step b), a mechanical separation of one phase, preferably an oil-water emulsion, is carried out.

6. Method according to one of the preceding claims, **characterized in that**
- an amount of 5% maximum, preferably 2-3%, in relation to the total weight of wet olive pomace, of lime is added to the wet olive pomace, or
- an amount of slaked lime and/or limewater is added to the wet olive pomace, which (amount) corresponds to the concentration of calcium in the wet olive pomace when adding an amount of 5% maximum, preferably 2-3%, in relation to the total weight of wet olive pomace, of lime to the wet olive pomace.

7. Method according to one of the preceding claims, **characterized in that** the mechanical filtering according to step c) takes place by means of a press as the separating device and/or **in that** the mechanical filtering according to step c) takes place by means of a screw press and/or **in that** the mechanical filtering according to step c) takes place by means of a decanter as the separating device and/or **in that** the mechanical filtering according to step c) takes place by means of a filter device as the separating device.

8. Method according to one of the preceding claims, **characterized in that** the addition of the calcium compound is carried out through a dosing unit, preferably as powder-in-pulp dosing or by using a powder dosing machine.

9. Method according to Claim 8, **characterized in that** the addition of the calcium solution is carried out by a liquid-liquid dosing unit.

10. Method according to one of the preceding claims, **characterized in that** a process control takes place by determining the temperature of the wet olive pomace, before and/or after adding the calcium compound, according to step b), and/or before and/or after the mechanical separation of the liquid phase, according to step c).

11. Method according to one of the preceding claims, **characterized in that** processing the wet olive pomace from its provision, according to step a), up to the mechanical separation of the liquid phase from the wet olive pomace by forming the liquid-reduced solid phase, according to step c), takes place within 30 minutes.

12. Method according to one of the preceding claims, **characterized in that** the wet olive pomace is obtained from olives having a degree of ripeness of 4-5, starting from a scale of 1-7, wherein the degree of ripeness 7 indicates the over-ripeness of an olive.

13. Method according to one of the preceding claims, **characterized in that** before the mechanical separation of the liquid phase, according to step c), additional pectin is added to the wet olive pomace which is obtained from olives with a degree of ripeness of 6-7 or which has a holding time prior to step c) of more than 1 h.

14. Method according to one of the preceding claims, **characterized in that** the method for processing wet olive pomace comprises a further step d), processing the liquid phase from step c) in a second separating device (15), more particularly in a decanter, by forming a solid phase, an aqueous phase and where applicable an oil phase.

15. Method according to one of the preceding claims, **characterized in that** polyphenols are obtained from the aqueous phase, in particular in such a manner that the polyphenols are obtained from the aqueous phase by concentrating the aqueous phase and/or by adsorption.

16. Method according to one of the preceding claims, **characterized in that** the solid phase, which is formed when processing the liquid phase, is returned to the wet olive pomace prior to the mechanical separation of a liquid phase, according to step c).

## Revendications

1. Dispositif de traitement de grignons d'olive humides qui comprend au moins les étapes consistant à :
a) préparer des grignons d'olive humides,
b) ajouter un composé de calcium et/ou une solution de calcium aux grignons d'olive humides, et
c) clarifier les grignons d'olive humides en formant une phase solide et au moins une phase liquide dans un premier dispositif de séparation (10, 10', 10", 10"'),
l'étape b) étant mise en oeuvre avant l'étape c) et le traitement des grignons d'olive humides entre leur préparation selon l'étape a) jusqu'à la séparation mécanique de la phase liquide des grignons d'olive humides en formant la phase solide à teneur réduite en liquide selon l'étape c) étant effectué pendant un laps de temps maximum de une heure.

2. Procédé conforme à la revendication 1,
**caractérisé en ce que**
le composé de calcium est de l'oxyde de calcium ou chaux vive, ou le composé de calcium est de l'hydroxyde de calcium ou chaux éteinte ou le composé de calcium ou la solution de calcium est un sel de calcium.

3. Procédé conforme à la revendication 2,
**caractérisé en ce qu'**
en tant que sel de calcium on ajoute aux grignons d'olive humides de la wollastonite.

4. Procédé conforme à l'une des revendications précédentes,
**caractérisé en ce qu'**
après la préparation des grignons d'olive humides, selon l'étape a) et de préférence avant l'addition de composé de calcium et/ou de solution de calcium, selon l'étape b) on effectue une séparation mécanique de noyaux d'au moins une partie de la quantité totale de grignons d'olive humides en relation avec l'obtention d'huile d'olive.

5. Procédé conforme à l'une des revendications précédentes,
**caractérisé en ce qu'**
après la préparation de grignons d'olive humides, selon l'étape a) et de préférence avant l'addition du composé de calcium et/ou de la solution de calcium, selon l'étape b) on effectue une séparation mécanique d'une phase, de préférence d'une émulsion huile-eau.

6. Procédé conforme à l'une des revendications précédentes,
**caractérisé en ce qu'**
- on ajoute aux grignons d'olive humides une quantité de chaux maximum de 5% de préférence de 2 à 3 % par rapport au poids total de ces grignons humides, ou
- on ajoute aux grignons d'olive humides une quantité de chaux éteinte et/ou d'eau de chaux qui correspond à la concentration de calcium dans les grignons d'olive humides lors de l'addition dans les grignons d'olive humides d'une quantité de chaux maximum de 5% de préférence de 2-3% par rapport au poids total de ces grignons humides.

7. Procédé conforme à l'une des revendications précédentes,
**caractérisé en ce que**
la clarification mécanique selon l'étape c) est effectuée au moyen d'une presse en tant que dispositif de séparation, et/ou la clarification mécanique selon l'étape c) est effectuée au moyen d'une presse à vis sans fin et/ou la clarification mécanique selon l'étape c) est effectuée au moyen d'un décanteur en tant que dispositif de séparation et/ou la clarification mécanique selon l'étape c) est effectuée au moyen d'un dispositif mécanique en tant que dispositif de séparation.

8. Procédé conforme à l'une des revendications précédentes,
**caractérisé en ce que**
l'addition de composés de calcium est effectuée par l'intermédiaire d'une installation de dosage, de préférence sous la forme d'un dosage de type poudre, dans de la pâte ou en utilisant une machine de dosage de poudre.

9. Procédé conforme à la revendication 8,
**caractérisé en ce que**
l'addition de la solution de calcium est effectuée par une installation de dosage liquide - liquide.

10. Procédé conforme à l'une des revendications précédentes,
**caractérisé en ce qu'**
une commande de process par détermination de la température des grignons d'olive humides est effectuée avant et/ou après l'addition du composé de calcium selon l'étape b) et/ou avant et/ou après la séparation mécanique de la phase liquide selon l'étape c).

11. Procédé conforme à l'une des revendications précédentes,
**caractérisé en ce que**
le traitement des grignons d'olive humides entre leur préparation selon l'étape a) jusqu'à la séparation mécanique de la phase liquide des grignons d'olive humides de façon à former la phase solide à teneur réduite en liquide selon l'étape c) est effectué pendant un laps de temps de trente minutes.

12. Procédé conforme à l'une des revendications précédentes,
**caractérisé en ce que**
les grignons d'olive humides sont obtenus à partir d'olives ayant un degré de maturité de 4-5 sur une échelle de 1-7, le degré de maturité de 7 correspondant à la sur-maturité d'une olive.

13. Procédé conforme à l'une des revendications précédentes,
**caractérisé en ce qu'**
on ajoute à des grignons d'olive humides obtenus à partir d'olives ayant un degré de maturité de 6-7, ou ayant un temps de séjour de plus d'une heure avant l'étape c) de la peptine supplémentaire avant la séparation mécanique de la phase liquide selon l'étape c).

14. Procédé conforme à l'une des revendications précédentes,
**caractérisé en ce que**
le procédé de traitement de grignons d'olive humides comprend une autre étape d) consistant en un traitement de la phase liquide issue de l'étape c) dans un second dispositif de séparation (15) en particulier dans un décanteur pour former une phase solide, une phase aqueuse et le cas échéant une phase huileuse.

15. Procédé conforme à l'une des revendications précédentes,
**caractérisé en ce que**
des polyphénols sont obtenus à partir de la phase aqueuse, en particulier ces polyphénols sont obtenus à partir de la phase aqueuse par concentration de la phase aqueuse et/ou par adsorption.

16. Procédé conforme à l'une des revendications précédentes,
**caractérisé en ce que**
la phase solide qui est formée lors du traitement de la phase liquide est renvoyée vers les grignons d'olive humides avant la séparation mécanique d'une phase liquide selon l'étape c).
